# EUROPÄISCHE PATENTSCHRIFT

(11) **EP 3 828 457 B1**
(45) Veröffentlichungstag und Bekanntmachung des Hinweises auf die Patenterteilung: **19.07.2023**
(21) Anmeldenummer: 19211750.5
(22) Anmeldetag: 27.11.2019
(51) Int. Cl.: F16L 33/025

(54) **SCHLAUCHKLEMME**
HOSE CLAMP
COLLIER POUR TUYAUX SOUPLES

(43) Veröffentlichungstag der Anmeldung: 02.06.2021
(73) Patentinhaber: Oetiker Schweiz AG, 8810 Horgen (CH)
(72) Erfinder: VETTER, Andreas, 8808 Pfäffikon (CH); BÖSIGER, Maxime, 8840 Einsiedeln (CH); WIDRIG, Markus, 8717 Benken SG (CH)
(74) Vertreter: Strehl Schübel-Hopf & Partner

(56) Entgegenhaltungen:
- DE-A1- 2 921 031
- DE-A1- 2 923 766
- US-B1- 6 243 924

## Beschreibung

### Stand der Technik

Schlauchklemmen zum Anschluss etwa eines Schlauches an einen Rohrnippel werden meistens mit vorgegebenem Nenndurchmesser so gestaltet, dass im gespannten Zustand die Innenfläche des Klemmbandes über ihren gesamten Umfang lückenlos an dem Schlauch anliegt und zwischen diesem und dem Rohrnippel eine durchgehende Flächenpressung erreicht wird.

Aus WO 2015/022024 A1 ist eine Schlauchklemme bekannt, bei der im Klemmband eine ohrartige Spanneinrichtung ausgebildet ist, die aus zwei radial nach außen ragenden Schenkeln und einem diese verbindenden Steg geformt ist. Mit einer entsprechenden Vorverformung dieser Spanneinrichtung kann gewährleistet werden, dass die Schlauchklemme mit möglichst wenig Spiel auf den Schlauch gesetzt werden kann. Anschließend wird die Klemme gegen den elastischen Widerstand der vorverformten Spanneinrichtung gespannt und plastisch verformt, wodurch eine enge und dichte Befestigung des Schlauchs am Rohrnippel erreicht wird.

Im montierten Zustand überlappt ein äußerer Abschnitt des Klemmbandes, der auch die nach außen ragende Spanneinrichtung umfasst, einen inneren Klemmbandabschnitt. Nach dem Festziehen der Schlauchklemme befindet sich ein Teilabschnitt des inneren Klemmbandabschnitt unmittelbar unterhalb der Spanneinrichtung. Dieser Teilabschnitt, zwischen den beiden Schenkeln der Spanneinrichtung im äußeren Bandabschnitt gelegen, ist im Gegensatz zu seinen beiden benachbarten Teilabschnitten, in denen der innere Bandabschnitt durch den unmittelbar anliegenden äußeren Bandabschnitt verstärkt wird, weniger gegen Abknicken in radialer Richtung oder auch Verdrehungen geschützt.

Eine Schlauchklemme mit den Merkmalen im Oberbegriff des Anspruchs 1 ist in DE 29 23 766 A1 offenbart.

### Zusammenfassung der Erfindung

Der Erfindung liegt die generelle Aufgabe zugrunde, Nachteile, wie sie bei vergleichbaren Schlauchklemmen nach dem Stand der Technik auftreten, mindestens teilweise zu beseitigen. Eine speziellere Aufgabe der Erfindung kann darin gesehen werden, eine im Durchmesser verstellbare Schlauchklemme mit einem verbesserten Schutz gegen ein Einknicken des Klemmbands beim Einbiegen in radialer Richtung oder bei anderen Verdrehungen bereitzustellen.

Die Lösung dieser Aufgabe gelingt mit der in Anspruch 1 angegebenen Schlauchklemme. Bei dieser ist auf dem inneren Bandabschnitt des Klemmbands mindestens eine zwischen den Rändern des Klemmbandes und parallel dazu verlaufende Wellensicke so ausgebildet, dass sich zumindest ein Teil der Wellensicke im geschlossenen Zustand des Klemmbandes unterhalb der Spanneinrichtung befindet. Insbesondere können auf dem inneren Bandabschnitt zwei jeweils an den beiden Seitenrändern des Klemmbands parallel zueinander verlaufende Wellensicken angeordnet sein.

Durch Verhaken entsprechender Zug- und Positionierhaken im Klemmband kann der Durchmesser der Schlauchklemme im montierten Zustand innerhalb eines gewissen Bereichs eingestellt werden. Je nachdem, welche der Zug- und Positionierhaken miteinander in Eingriff stehen, gelangt im montierten Zustand ein anderer Abschnitt des Klemmbandes in die Position unterhalb der Spanneinrichtung. Es ist daher sinnvoll, die Wellensicke bzw. die Wellensicken über einen Bereich des Klemmbandes verlaufen zu lassen, in dem alle Abschnitte enthalten sind, die dazu in Frage kommen, bei entsprechendem Klemmendurchmesser in die Position unterhalb der Spanneinrichtung zu gelangen.

Die Wellensicke ist als eine Aneinanderreihung in Längsrichtung ausgebildeter länglicher Sickenvertiefungen im Blech des Klemmbandes ausgebildet. Sinnvollerweise sind diese Vertiefungen senkrecht in radialer Richtung nach innen ins Klemmbandblech gedrückt, so dass sie im montierten Zustand ins Schlauchmaterial ragen und der Schlauchklemme dabei ebenso wie auch schon vorm bzw. beim Festziehen einen besseren Halt am Schlauch geben. Bei der Montage ebenso wie anschließend im Betrieb wirken die Wellensicken mit ihrer Wellenform einer Verdrehung der Schlauchklemme auf dem Schlauch entgegen. Außerdem vereinfachen die Unterbrechungen der Wellensicken zwischen den Einzelvertiefungen das Verformen des Klemmbandes mit der Hand, was bei der Verarbeitung ebenso wie beim Montieren von Vorteil ist.

Es ist auch denkbar, die Wellensicke senkrecht in radialer Richtung nach außen im Klemmband auszubilden, wodurch sich der zusätzliche Druck auf den Schlauch vermeiden lässt; in diesem Fall drückt der über die Spanneinrichtung hinausgehende Teil der Wellensicke bzw. der Wellensicken gegen die Innenfläche des äußeren Klemmbandabschnitts. Es kann daher sinnvoll sein, in den an die Spanneinrichtung angrenzenden Teil des äußeren Klemmbandabschnitts entsprechende nach außen ragende Längssicken zur Aufnahme der Wellensicken auszubilden.

Die Wellensicken tragen über die Verbesserung der Biegefestigkeit hinaus auch zu einer höheren Zugfestigkeit und dadurch zu einer verbesserten Kraftaufnahme in Umfangsrichtung bei und führen damit insgesamt zu einer erhöhten Stabilität der Schlauchklemme.

### Zeichnungen

Ein Ausführungsbeispiel der Erfindung wird nachstehend anhand der Zeichnungen näher erläutert. Darin zeigen
Figur 1 eine perspektivische Darstellung einer Schlauchklemme nach einem Ausführungsbeispiel der Erfindung im geschlossenen Zustand,
Figur 2 eine weitere perspektivische Darstellung der Schlauchklemme im geschlossenen Zustand aus einem anderen Betrachtungswinkel,
Figur 3 die Schlauchklemme im gestreckten Ausgangszustand, gesehen von der im geschlossenen Zustand äußeren Seite, sowie
Figur 4 die Schlauchklemme im gestreckten Ausgangszustand, gesehen von der im geschlossenen Zustand inneren Seite.

### Ausführungsbeispiel

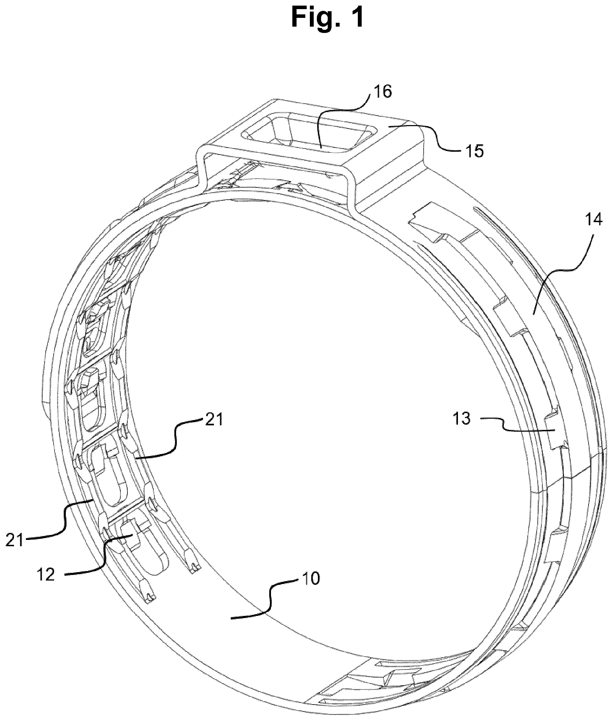

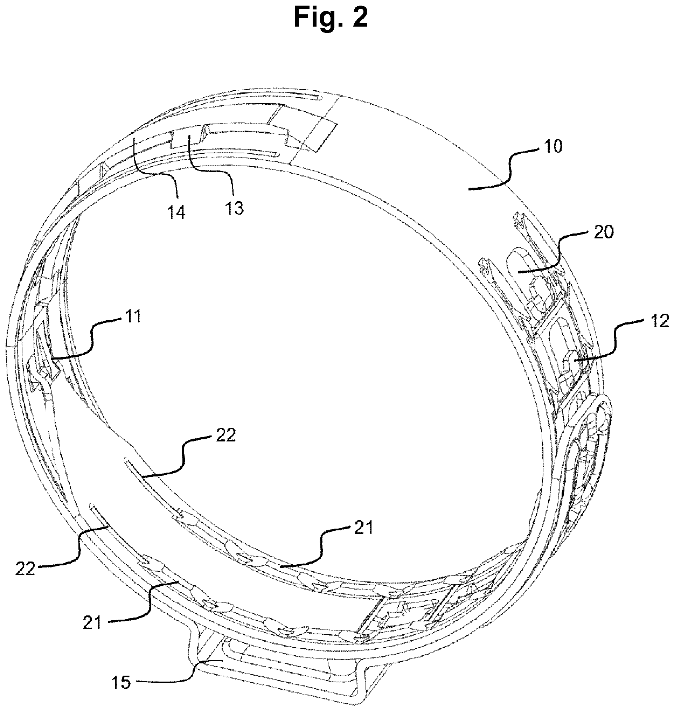

Die in den Figuren 1 und 2 dargestellte Schlauchklemme nach einem Ausführungsbeispiel der Erfindung besteht aus einem offenen Klemmband **10,** das ausgehend vom inneren Bandende eine Zunge **11,** eine Reihe von (in dem gezeigten Beispiel sieben) Positionierhaken **12,** einen durch zwei parallele Längsschnitte aus dem Klemmband **10** geschnittenen, über Stege **13** mit Seitenteilen des Klemmbandes **10** verbundenen Bandbogen **14,** eine Spanneinrichtung **15** in Gestalt eines sogenannten "Oetiker"-Ohrs mit einem Paar von auswärts gekröpften Schenkeln und einem diese verbindenden, durch eine Sicke **16** verstärkten Steg, eine Freistellungshaube **17** sowie im anderen, äußeren Bandabschnitt drei Zughaken **19** und Öffnungshauben **18** aufweist.

Eine solche Schlauchklemme ist insbesondere zur Dichtung und Befestigung von Faltenbälgen, etwa im Einsatz bei Gelenkwellen, aus thermoplastischen Kunststoffen oder anderen schwer verformbaren Materialien hoher Shore-Härte gedacht.

Im Gebrauch wird die vom Hersteller im geschlossenen Zustand gelieferte Schlauchklemme axial auf das Abbindegut, etwa einen Rohrnippel und einen diesen umgebenden Schlauch, aufgeschoben oder, alternativ, zur radialen Montage geöffnet und um das Abbindegut herumgelegt, wobei die Zunge **11** unter dem Bandbogen **14** zu liegen kommt.

Sodann werden die im äußeren Bandabschnitt vorhandenen drei Zughaken **19** mit den dem kleinstmöglichen Durchmesser des jeweiligen Abbindeguts entsprechenden, im inneren Bandabschnitt angeordneten Positionierhaken **12** in Eingriff gebracht.

In dem gezeigten Ausführungsbeispiel sind drei Zughaken **19** vorhanden. Je nach den Kraft- und Festigkeitsanforderungen können zwei oder ein einziger Zughaken ausreichen oder auch mehr als drei Zughaken **19** erforderlich sein.

Die Anzahl an Positionierhaken **12** ist größer als die der Zughaken **19,** um einen entsprechenden Variationsbereich im Klemmendurchmesser zu erreichen. In dem gezeigten Ausführungsbeispiel sind sieben Positionierhaken **12** vorgesehen. In Figur 1 ist die Schlauchklemme auf einen mittleren Durchmesser geschlossen. Beim kleinsten geschlossenen Durchmesser würde in diesem Fall der mittlere der sieben Positionierhaken **12** unter der Freistellungshaube **17** liegen, und zur Bandmitte hin angeordneten drei Positionierhaken **12** in Eingriff mit den drei Zughaken **19** stehen.

Die erfindungsgemäße Schlauchklemme weist zwei in Längsrichtung verlaufende Wellensicken **21** auf. Die Wellensicken **21** verlaufen parallel zueinander an den Seitenrändern des Klemmbands **10** in einem Bereich von der Zunge **11** bis zum letzten der Positionierhaken **12.** Dieser Bereich ist so gewählt, dass gesichert ist, dass unabhängig davon, mit welchem Durchmesser die Schlauchklemme auf dem Schlauch befestigt ist, jeweils ein Teil der Wellensicken **21** im montierten Zustand unterhalb der Spanneinrichtung **15** positioniert ist. Je nach Konfiguration der Schlauchklemme kann auch ein anderer Bereich für die Wellensicke, insbesondere ein kleinerer oder größerer Bereich, dieses Kriterium erfüllen.

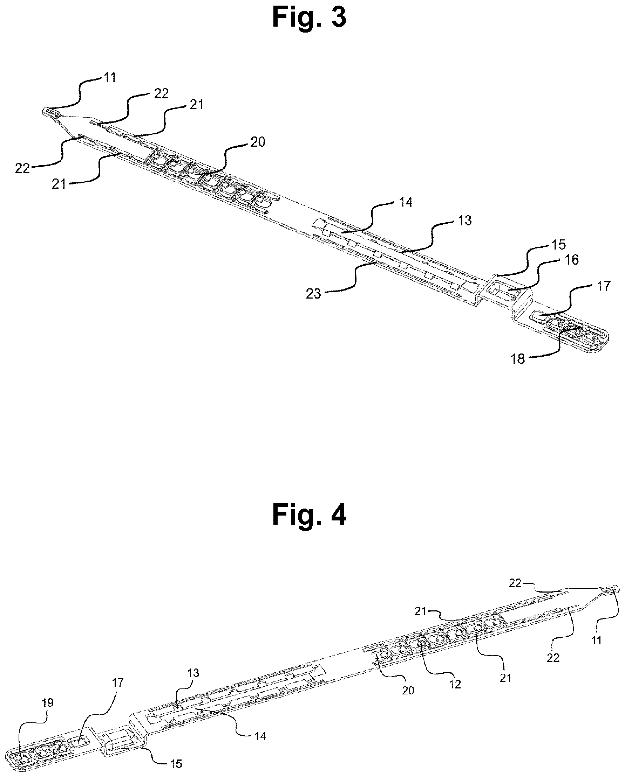

Wie insbesondere aus den Figuren 3 und 4 ersichtlich, ist jeder Positionierhaken **12** in einem aus dem Klemmband **10** ausgeschnittenen Freistellfenster **20** angeordnet. Er umfasst einen Lappen, der an seiner von der Spanneinrichtung **15** abgewandten Kante mit dem Klemmband **10** zusammenhängt, und zum Klemmband **10** im Wesentlichen parallel verläuft. Am Übergang zu dem Lappen ist radial einwärts und von der Spanneinrichtung **15** abgewandt eine Stufe ausgebildet.

Die Zughaken **19** sind jeweils radial einwärts kuppelartig gewölbt und weisen einen Lappen auf, der den Lappen des Positionierhakens **12** übergreift. Die Öffnungshaube **18,** die auf der gegenüberliegenden Seite des Zughakens radial auswärts ausgeformt ist, gewährt dem Positionierhaken **12** den nötigen Platz, damit der Lappen des Zughakens **19** überhaupt den Lappen des Positionierhakens **12** übergreifen kann. Am Übergang zu dem Lappen ist radial auswärts und der Spanneinrichtung 15 zugewandt eine Stufe ausgebildet.

Die Lappen der Postionier- und Zughaken **12, 19** halten den äußeren und den inneren Klemmbandabschnitt aufeinander, während die Kraftübertragung bei gespannter Schlauchklemme zwischen quer zur Längsrichtung des Klemmbandes **10** stehenden Querflächen der Zughaken **19** und quer zur Längsrichtung des Klemmbandes **10** stehenden Querflächen der Positionierhaken **12** erfolgt.

Je nach Gestaltungslänge der Lappen kann im geschlossenen Zustand der Schlauchklemme die Stufe des Positionierhakens **12** am freien Ende des Lappens des Zughakens **19** und die Stufe des Zughakens **19** am freien Ende des Lappens des Positionierhakens **12** anliegen, was eine sekundäre Kraftübertragungsstelle generiert und in einer gegenseitigen Stabilisierung der am inneren und am äußeren Bandabschnitt angeordneten Haken resultiert.

Im geschlossenen Zustand der Schlauchklemme befinden sich drei der Positionierhaken **12** in Eingriff mit den Zughaken **19.** Abhängig vom Schlauchdurchmesser werden die Positionierhaken für den Eingriff mit den Zughaken so ausgewählt, dass sie den gewünschten engen Verschluss gewährleisten können. Zungenseitig davon gelangt ein Teil des inneren Bandendes in die Position unterhalb der Spanneinrichtung **15.** Die in dem dafür in Frage kommenden Teil des Klemmbandes **10** vorgesehenen seitlichen Wellensicken **21** stabilisieren das Klemmband **10** dabei gegen ein Einknicken in radialer Richtung unter der Spanneinrichtung **15.** Die Wellensicken **21** können in unterbrochener Rillenform bzw. als Aneinanderreihung von Einzelsicken ausgestaltet sein. An beiden Seitenrändern des Klemmbandes **10** gehen sie im Ausführungsbeispiel jeweils in Richtung zur Zunge hin in durchgehend rinnenförmige Verstärkungssicken **22** über (alternativ oder zusätzlich können die Wellensicken auch in Richtung zur Spanneinrichtung hin als solche durchgehenden Verstärkungssicken fortgesetzt werden.

Zusätzlich zu den Wellensicken **21** sind im Ausführungsbeispiel im Bereich des Bandbogens **14,** der einen Zungenkanal für die Zunge **11** bildet und diese im geschlossenen Zustand aufnimmt, seitliche Verstärkungssicken **23** in durchgehender Rillenform vorgesehen. Bruchstellen treten gehäuft im Bereich des Bandbogens **14** auf so dass die zusätzlichen Verstärkungssicken **23** hier wirksam zu einer Stabilisierung des Bandbogenbereichs beitragen können.

Im vorliegenden Ausführungsbeispiel sind die durchgehenden Verstärkungssicken **22, 23** sowohl im Bereich der Positionierhaken **12** als auch in dem des Bandbogens **14** vorgesehen, um gemeinsam zur Gesamtstabilität der Schlauchklemme beizutragen. Es ist aber auch denkbar, neben den Wellensicken **21** nur die Verstärkungssicken **22** oder nur die Verstärkungssicken **23** vorzusehen.

Im Ausführungsbeispiel sind zudem die Zughaken **19** und Öffnungshauben **18** von in das Klemmband **10** eingeprägten Verstärkungssicken umgeben, die bei gegebener Materialstärke die Biegesteifigkeit erhöhen und die Übertragung höherer Kräfte gestatten.

Aus dem gleichen Grund sind die Freistellfenster **20** der Positionierhaken **12** durch Prägungen zwischen den Fenstern **20** und den Seitenkanten des Klemmbandes **10** versteift.

### Bezugszeichen

| | |
|---|---|
| **10** | Klemmband |
| **11** | Zunge |
| **12** | Positionierhaken |
| **13** | Stege |
| **14** | Bandbogen |
| **15** | Spanneinrichtung |
| **16** | Sicke |
| **17** | Freistellungshaube |
| **18** | Öffnungshaube |
| **19** | Zughaken |
| **20** | Freistellfenster |
| **21** | Wellensicke |
| **22** | Verstärkungssicke |
| **23** | Verstärkungssicke |

## Patentansprüche

1. Schlauchklemme aus einem Klemmband (10) mit im geschlossenen Zustand der Schlauchklemme einander überlappenden Bandabschnitten, an denen Haken (12, 19) zum Schließen der Schlauchklemme angeordnet sind, und mit einer im äußeren Bandabschnitt angeordneten Spanneinrichtung (15) zum Spannen der Schlauchklemme um einen zu klemmenden Gegenstand,
wobei die Spanneinrichtung zwei vom Klemmband aus nach außen ragende Schenkel und einen die Schenkel verbindenden Steg aufweist,
**gekennzeichnet dadurch, dass** auf dem inneren Bandabschnitt des Klemmbands mindestens eine zwischen und parallel zu den Rändern des Klemmbandes verlaufende Wellensicke (21) in Form einer Aneinanderreihung in Längsrichtung des Klemmbandes ausgebildeter länglicher Sickenvertiefungen so ausgebildet ist, dass sich zumindest ein Teil der Wellensicke im geschlossenen Zustand des Klemmbandes zwischen der Spanneinrichtung und dem zu klemmenden Gegenstand befindet.

2. Schlauchklemme nach Anspruch 1,
wobei die mindestens eine Wellensicke (21) aus einer in Längsrichtung des Klemmbandes (10) verlaufenden Reihe radial nach innen gerichteter Vertiefungen im Klemmband besteht.

3. Schlauchklemme nach Anspruch 1,
wobei die mindestens eine Wellensicke (21) aus einer in Längsrichtung des Klemmbandes (10) verlaufenden Reihe radial nach außen gerichteter Vertiefungen im Klemmband besteht.

4. Schlauchklemme nach einem der vorhergehenden Ansprüche,
wobei auf dem inneren Bandabschnitt zwei jeweils an einem seitlichen Rand des Klemmbandes (10) parallel zueinander verlaufende Wellensicken (21) angeordnet sind.

5. Schlauchklemme nach einem der vorhergehenden Ansprüche,
wobei der Innendurchmesser der Schlauchklemme im geschlossenen Zustand mit Hilfe der Haken (12, 19) an den einander überlappenden Bandabschnitte an verschiedene Schlauchdurchmesser angepasst werden kann, und
wobei die Länge der Wellensicke bzw. der Wellensicken (21) so bestimmt ist, dass sich unabhängig davon, wie eng die Schlauchklemme um den Schlauch verschlossen ist, ein Teil der Wellensicke bzw. der Wellensicken im geschlossenen Zustand der Schlauchklemme unterhalb der Spanneinrichtung (15) befindet.

6. Schlauchklemme nach einem der vorhergehenden Ansprüche,
wobei die Wellensicke bzw. die Wellensicken (21) an einem Ende oder an beiden Enden jeweils durch durchgehend verlaufende Verstärkungssicken (22) fortgesetzt sind, die radial nach innen oder radial nach außen ausgeformt sind.

7. Schlauchklemme nach einem der vorhergehenden Ansprüche,
wobei der die Schenkel verbindende Steg der Spanneinrichtung (15) eine geschlossene und konkav nach innen gerichtete Verstärkungssicke (16) aufweist.

## Claims

1. A hose clamp made of a clamping band (10) comprising band sections which overlap one another in the closed state of the hose clamp and on which hooks (12, 19) are arranged for closing the hose clamp, and a tightening device (15) arranged in the outer band section for tightening the hose clamp around an object to be clamped,
wherein the tightening device comprises two outwardly protruding legs and a bar connecting the legs,
**characterized in that** at least one corrugated bead (21) extending between the edges of the clamping band and parallel to them is formed on the inner band section of the clamping band as a sequence of elongated bead depressions formed in the longitudinal direction of the clamping band, so that at least a part of the corrugated bead is located between the tightening device and the object to be clamped in the closed state of the clamping band.

2. The hose clamp according to claim 1,
wherein the at least one corrugated bead (21) consists of a sequence of radially inwardly directed depressions in the clamping band (10), extending in the longitudinal direction of the clamping band.

3. The hose clamp according to claim 1,
wherein the at least one corrugated bead (21) consists of a sequence of radially outwardly directed depressions in the clamping band (10), extending in the longitudinal direction of the clamping band.

4. The hose clamp according to any one of the preceding claims,
wherein two corrugated beads (21) extending parallel to each other are arranged on the respective lateral peripheries of the clamping band on the inner band section.

5. The hose clamp according to any one of the preceding claims,
wherein the inner diameter of the hose clamp in the closed state can be adjusted to different hose diameters using hooks (12, 19) at the overlapping band sections, and
wherein the length of the corrugated bead or corrugated beads (21) is such that, independently of how tight the hose clamp is fastened around the hose, a part of the corrugated bead or the corrugated beads is located below the tightening device (15) in the closed state of the hose clamp.

6. The hose clamp according to any one of the preceding claims,
wherein the corrugated bead or the corrugated beads (21) are continued on one end or on both ends by respective reinforcement beads (22) which extend continuously and are formed radially inwardly or radially outwardly.

7. The hose clamp according to any one of the preceding claims,
wherein the bar connecting the legs of the tightening device (15) comprises a closed reinforcement bead (16) directed concavely inwardly.

## Revendications

1. Collier pour tuyau souple composé d'une bande de serrage (10) avec des tronçons de bande se chevauchant lorsque le collier pour tuyau souple est à l'état fermé, sur lesquels sont disposés des crochets (12, 19) pour fermer le collier pour tuyaux souples, et comprenant un dispositif de serrage (15) disposé dans le tronçon de bande extérieur pour serrer le collier pour tuyau souple sur un objet à serrer,
dans lequel le dispositif de serrage présente deux branches en saillie vers l'extérieur en partant du collier pour tuyau souple et une branche transversale reliant les branches,
**caractérisé en ce que** sur le tronçon de bande intérieur du collier pour tuyau souple est formée au moins une nervure (21), entre les bords du collier pour tuyau et parallèle à ceux-ci, sous forme d'une rangée de creux de nervure longitudinaux l'un contre l'autre formés dans le sens longitudinal du collier pour tuyau, de sorte qu'au moins une partie de la nervure se trouve entre le dispositif de serrage et l'objet à serrer lorsque le collier pour tuyau souple est à l'état fermé.

2. Collier pour tuyau souple selon la revendication 1,
dans lequel l'au moins une nervure (21) est composée d'une rangée de creux dirigés radialement vers l'intérieur dans le collier pour tuyau, dans le sens longitudinal du collier pour tuyau (10).

3. Collier pour tuyau souple selon la revendication 1,
dans lequel l'au moins une nervure (21) est composée d'une rangée de creux dirigés radialement vers l'extérieur dans le collier pour tuyau, dans le sens longitudinal du collier pour tuyau (10).

4. Collier pour tuyau souple selon l'une des revendications précédentes,
dans lequel deux nervures (21) respectivement parallèles entre elles sur un bord latéral du collier pour tuyau souple (10), sont disposées sur le tronçon de bande intérieur.

5. Collier pour tuyau souple selon l'une des revendications précédentes,
dans lequel le diamètre intérieur du collier pour tuyau souple dans l'état fermé peut être adapté à différents diamètres de tuyaux à l'aide des crochets (12, 19) sur les tronçons de bande se chevauchant, et
dans lequel la longueur de la ou des nervure(s) (21) est ainsi définie qu'indépendamment de l'étroitesse de fermeture du collier pour tuyau souple autour du tuyau, une partie de la ou des nervure(s) se trouve sous le dispositif de serrage (15) lorsque le collier pour tuyau souple est à l'état fermé.

6. Collier pour tuyau souple selon l'une des revendications précédentes,
dans lequel la ou les nervure(s) (21) se poursuivent sur une extrémité ou sur les deux extrémités par des nervures de renfort (22) traversantes respectives qui sont formées radialement vers l'intérieur ou radialement vers l'extérieur.

7. Collier pour tuyau souple selon l'une des revendications précédentes,
dans lequel la branche transversale du dispositif de serrage (15) reliant les branches présente une nervure de renfort (16) fermée et dirigée de manière concave vers l'intérieur.
